Europäisches Patentamt

European Patent Office

Office européen des brevets

(11) Publication number: **0 044 621**
**B1**

(12) **EUROPEAN PATENT SPECIFICATION**

(45) Date of publication of patent specification: **27.12.84**

(51) Int. Cl.³: **G 01 J 3/02**

(21) Application number: **81302778.6**

(22) Date of filing: **19.06.81**

(54) Filter device.

(30) Priority: **09.07.80 FI 802206**

(43) Date of publication of application:
**27.01.82 Bulletin 82/04**

(45) Publication of the grant of the patent:
**27.12.84 Bulletin 84/52**

(84) Designated Contracting States:
**AT BE CH DE FR GB IT LI LU NL SE**

(56) References cited:
**DE-A-2 324 049**
**DE-A-2 942 790**
**US-A-3 529 889**

(73) Proprietor: **LABSYSTEMS OY**
**Pulttitie 9**
**SF-00810 Helsinki 81 (FI)**

(72) Inventor: **Ekholm, Pertti**
**Sammatintie 6 L 130**
**FI-00550 Helsinki 55 (FI)**

(74) Representative: **Tillbrook, Christopher John**
**c/o Reginald W. Barker & Co. 13, Charterhouse**
**Square**
**London EC1M 6BA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention is concerned with a filter device for the filtration of radiation in a measurement device measuring radiation, said filter device comprising several different filters fitted into one detachable disc.

By means of the device in accordance with the present invention, it is possible to exchange several filters simultaneously and rapidly, e.g., for a photometer or fluorometer. Moreover, the present invention permits automatic taking into use of the filter at each particular time required, as well as ensuring that the filters are in the correct position in relation to the source of radiation.

In the currently available measurement devices (e.g., photometer or fluorometer), such as taught in DE—A—2 324 049, the filters, which are often high-standard interference filters, are exchanged in their own cassettes manually, or the filters are mounted in manually or automatically movable discs which are a fixed component of the device or difficult to detach and to replace. It also happens frequently that the filters are placed incorrectly, with the wrong side towards the source of radiation, in which case the filters become heated in excess of the permitted temperature values and are therefore aged sooner than would be normal.

According to the invention there is provided a filter device, for filtering radiation, and forming part of an apparatus for measuring radiation, said device comprising:

a disc fitted with a plurality of circumferentially-spaced different filters said disc being detachably supported in a vertical plane by support means in said apparatus,

said support means for said disc defining a predetermined location for said disc and thus for the disc axis; characterised in that

a first magnet is fixedly mounted on said support means at a location adjacently below or at, said predetermined location for the disc axis; and

a second magnet, is mounted at the disc centre,

opposite poles of said first and second magnets being arranged to face one another when said disc is in position in said support means,

so that the disc is held in position and urged towards said support means by the magnetic forces between said first and second magnets.

By means of the device in accordance with the invention, several advantages are achieved, such as:

1. simultaneous replacement of several filters takes place in a few seconds.

2. in connection with the replacement, the filter wheel does not have to be detached or fastened by means of any particular units.

3. being always used in the correct position, premature damaging and ageing of the filter is prevented.

4. positioning of the filter wheel in the wrong way is inhibited, because the error is noticed immediately.

5. when making use of the present invention, the filter mechanism can be made simple, and no precise tolerances are necessary, whereby considerable savings are made in the production costs.

An embodiment of the invention will be described in more detail below with reference to the attached drawing, wherein

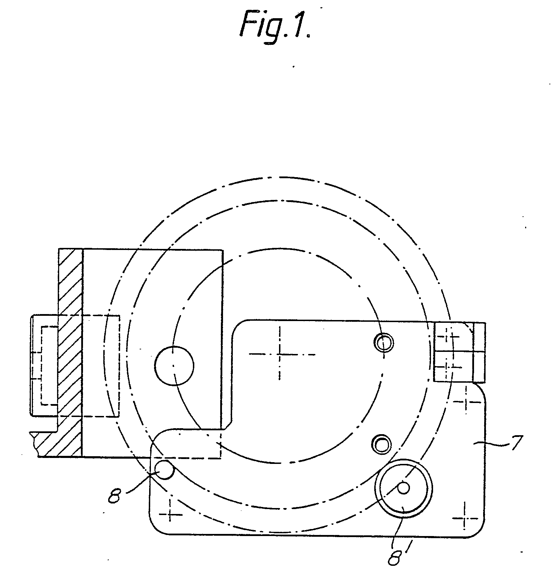

Figure 1 shows a device in accordance with the invention as a front view, in section, and without the filter disk,

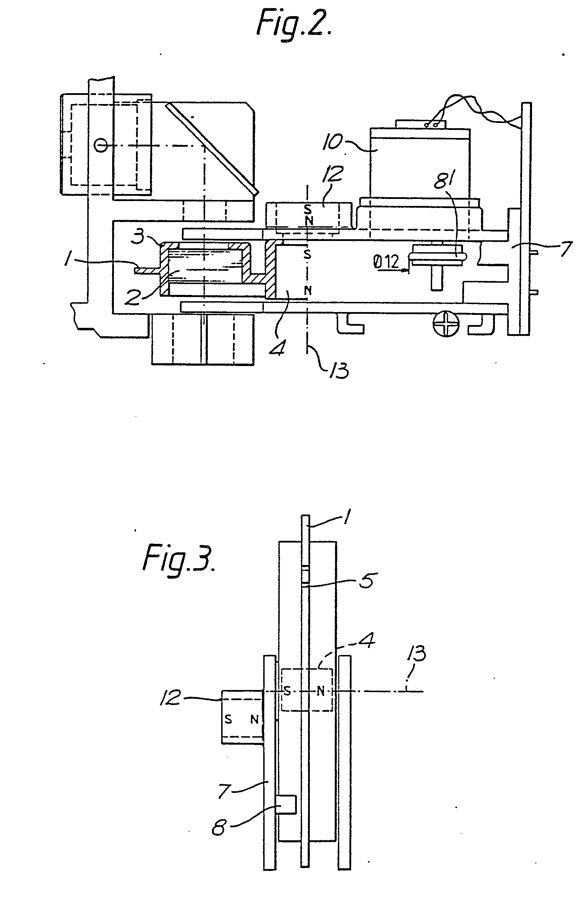

Figure 2 shows the device as a top view and partly in section, and

Figure 3 shows the same as a side view.

The filter wheel 1 has, e.g., eight filters 2 in compartments of their own. Usually the filters 2 admit the passage of a certain wave-length band, whose properties vary depending on the type of the filter. The filters 2 are attached to the filter wheel 1 by means of support units 3 so that they are placed equally far from the centre point 13 of the wheel 1. The filter wheel 1 also includes a magnetic piece 4 and an automatically readable code 5 indicating the position of the filter wheel 1 and of the various filters 2 positioned therein. The magnet piece is placed at the centre point of the wheel.

The filter wheel 1 is placed in the filter mechanism 7 of the measurement device, where the filter wheel 1 rests on rotary support units 8 and 8'. The motor 10 is directly coupled to one of the support units 8'. When the motor 10 rotates the said support unit, the filter wheel 1 rotates along with one of the support units and as supported by both support units.

The filter mechanism 7 includes a stationary magnet piece 12, which is somewhat underneath the centre 13 of the filter wheel 1. At this centre 13 there is the magnet piece 4 of the filter wheel 1, whereby the N- and S-poles of the magnet pieces 4 and 12 tend to approach each other. The magnet pieces are positioned so that their N- and S-poles are next to each other, whereby the magnetic force pulls the filter wheel 1 downwards and, at the same time, against the support units 8 and 8' of the filter mechanism 7. In this case the filter wheel 1 is correctly positioned in the filter mechanism 7, whereby the motor 10 and the support unit 8' constituting an extension of the motor are capable of rotating the filter wheel 1, and the filters 2 placed therein are in the correct position.

If the filter wheel 1 is placed in the incorrect position into the filter mechanism 7, the equal poles of the magnet pieces 4 and 12 reject each other. The operator easily notices this rejection, e.g., thereby that when the filter wheel is being placed into position, a little jerk is felt in the hand and the filter wheel does not rotate even though the motor is operated.

Should different filters have the effect that the disc is out of balance, this does, nevertheless, not have the effect that the gravitational force tends to turn the disc into only one certain position in the device, because the magnetic force keeps the disc in the set position.

The magnetic force also increases the friction between the drive wheel 8' and the disc 1.

The invention is not restricted to the above embodiment only, but it may show even considerable variation within the scope of the patent claims. The magnet of the filter device does not necessarily have to be placed underneath the centre axis of the filter disc, but it may also be placed at the level of the centre axis.

## Claims

1. A filter device, for filtering radiation, and forming part of an apparatus for measuring radiation, said device comprising:

a disc (1) fitted with a plurality of circumferentially-spaced different filters, said disc being detachably supported in a vertical plane by support means (7, 8, 8') in said apparatus,

said support means (7, 8, 8') for said disc defining a predetermined location for said disc and thus for the disc axis (13); characterised in that

a first magnet (12) is fixedly mounted on said support means (7, 8, 8') at a location adjacently below or at, said predetermined location for the disc axis (13), and

a second magnet (4), is mounted at the disc centre,

opposite poles (N, S) of said first and second magnets (4, 12) being arranged to face one another when said disc is in position in said support means, so that the disc is held in position and urged towards said support means by the magnetic forces between said first and second magnets.

2. A filter device as claimed in Claim 1 further characterised in that said first magnet (12) is positioned at a level below said predetermined location for the disc axis (13).

3. A filter device as claimed in Claim 2 further characterised in that said first magnet is positioned at the same level as said predetermined location for the disc axis (13).

## Revendications

1. Mécanisme pour filtrer, pour la filtration d'une radiation, faisant partie d'un appareil pour la mesure d'une radiation, comprenant:

un disque (1) muni d'une pluralité de filtres différents espacés en sens circonférentiel, ce disque étant supporté de manière démontable dans un plan vertical par des moyens porteurs (7, 8, 8'), dans ledit appareil, ces moyens porteurs (7, 8, 8') du disque définissant un emplacement prédéterminé de ce disque et, ainsi, de son axe (13), caractérisé en ce qu'un premier aimant (12) est monté de manière fixe sur les moyens porteurs (7, 8, 8') à un endroit voisin en dessous du niveau ou au niveau dudit emplacement prédéterminé de l'axe (13) du disque, et un second aimant (4) est monté au centre du disque, les pôles opposés (N, S) du premier et du second aimant (4, 12) sont disposés en face l'un de l'autre quand le disque est en position dans les moyens porteurs, de sorte que ce disque est tenu à sa position et poussé vers les moyens porteurs par les forces magnétiques qui s'exercent entre le premier et le second aimant.

2. Mécanisme pour filtrer selon la revendication 1 caractérisé en ce que le premier aimant (12) est disposé à un niveau inférieur à l'emplacement prédéterminé de l'axe (13) du disque.

3. Mécanisme pour filtrer selon la revendication 2 caractérisé en ce que le premier aimant est disposé au même niveau que l'emplacement prédéterminé de l'axe (13) du disque.

## Patentansprüche

1. Filtereinrichtung zum Filtern von Strahlung als Teil eines Gerätes zur Strahlungsmessung, mit einer Scheibe (1), die mit einer Vielzahl von in Umfangsrichtung mit Abständen zueinander angeordneten, unterschiedlichen Filtern versehen und lösbar in einer vertikalen Ebene mit Hilfe eines Tragmittels (7, 8, 8') in dem Gerät gehalten ist, wobei das Tragmittel (7, 8, 8') für die Scheibe eine vorbestimmte Stelle für die Scheibe und so auch für die Scheibenachse (13) festlegt, dadurch gekennzeichnet, daß ein erster Magnet (12) unverrückbar an dem Tragmittel (7, 8, 8') an einer Stelle befestigt ist, die in unmittelbarer Nachbarschaft unter oder an der vorbestimmten Stelle für die Scheibenachse (13) liegt, und eine zweiter Magnet (4) an dem Schiebenmittelpunkt befestigt ist, wobei gegenseitige Pole (N, S) des ersten und zweiten Magneten (4, 12) sich gegenüberliegend angeordnet sind, wenn die Schiebe sich in Position in dem Tragmittel befindet, so daß die Scheibe aufgrund der magnetischen Kräfte zwischen dem ersten und zweiten Magneten in ihrer Lage gehalten und gegen das Tragmittel gedrückt wird.

2. Filtereinrichtung nach Anspruch 1, dadurch gekennzeichnet, daß der ersten Magnet (12) auf einem Niveau unterhalb der vorbestimmten Stelle für die Scheibenachse (13) angeordnet ist.

3. Filtereinrichtung nach Anspruch 2, dadurch gekennzeichnet, daß der ersten Magnet auf demselben Niveau angeordnet ist wie die vorbestimmte Stelle der Scheibenachse (13).

**0 044 621**

*Fig.1.*

1

## Fig.2.

## Fig.3.